(19) Europäisches Patentamt
European Patent Office
Office européen des brevets

(11) **EP 3 489 811 B1**

(12) **FASCICULE DE BREVET EUROPEEN**

(45) Date de publication et mention
de la délivrance du brevet:
**16.08.2023 Bulletin 2023/33**

(21) Numéro de dépôt: **18208319.6**

(22) Date de dépôt: **26.11.2018**

(51) Classification Internationale des Brevets (IPC):
**G06F 3/0481** (2022.01)   **G06F 3/04845** (2022.01)
**G06F 3/14** (2006.01)   **G09G 5/14** (2006.01)
**G06T 19/00** (2011.01)

(52) Classification Coopérative des Brevets (CPC):
**G06F 3/1454; G06F 3/0481; G06F 3/04845;**
**G06T 19/006; G09G 5/14;** G09G 2354/00

(54) **PROCÉDÉ D'AFFICHAGE EN RÉALITÉ MIXTE D'AU MOINS UN OBJET VIRTUEL, TERMINAL ET SYSTÈME ASSOCIÉ**

MIXED-REALITY-ANZEIGEVERFAHREN MINDESTENS EINES VIRTUELLEN OBJEKTS, ENDGERÄT UND ENTSPRECHENDES SYSTEM

METHOD OF MIXED REALITY DISPLAY OF AT LEAST ONE VIRTUAL OBJECT, TERMINAL AND SYSTEM THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2017 FR 1761321**

(43) Date de publication de la demande:
**29.05.2019 Bulletin 2019/22**

(73) Titulaire: **Orange**
**92130 Issy-les-Moulineaux (FR)**

(72) Inventeurs:
• **FLOURY, Cédric**
**92326 CHATILLON CEDEX (FR)**
• **CARTIGNY, Jean**
**92326 CHATILLON CEDEX (FR)**

(74) Mandataire: **Cabinet Beau de Loménie**
**158, rue de l'Université**
**75340 Paris Cedex 07 (FR)**

(56) Documents cités:
**WO-A1-2015/108887   WO-A1-2016/014876**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte au domaine général de la réalité mixte, parfois aussi appelée réalité hybride, et concerne plus particulièrement un procédé d'affichage en réalité mixte d'au moins un d'objet virtuel.

L'utilisateur d'un terminal tel qu'un ordinateur est souvent amené à utiliser en même temps plusieurs applications informatiques, par exemple un logiciel de traitement de texte ainsi qu'une application de courrier électronique.

Cependant, la taille restreinte de l'écran du terminal ne permet pas souvent d'afficher simultanément toutes les fenêtres des applications utilisées, de sorte qu'elles soient bien visibles par l'utilisateur.

L'affichage de certaines applications est par exemple réduit à une simple icône, l'utilisateur n'ayant alors pas de retour visuel sur ces applications et devant effectuer des opérations de commande afin de réafficher ces applications.

Il existe donc un besoin pour une solution permettant d'améliorer l'affichage simultané d'une pluralité d'applications.

Le document WO 2016/014876 décrit un système comprenant une fenêtre d'affichage de réalité mixte tridimensionnelle. Le document WO 2015/108887 décrit un procédé permettant d'étendre une zone de visualisation d'un dispositif d'affichage.

Objet et résumé de l'invention

La présente invention concerne un procédé d'affichage en réalité mixte d'au moins un objet virtuel selon la revendication 1.

Ainsi, un utilisateur du premier terminal peut étendre l'affichage des applications informatiques utilisées hors du dispositif d'affichage du deuxième terminal. Un grand nombre d'objets virtuels correspondants à ces applications peut être affiché simultanément.

Dans un mode de réalisation particulier, l'au moins un objet virtuel est une deuxième fenêtre de l'application informatique.

Dans un mode de réalisation particulier, le procédé comprend en outre les étapes suivantes, mise en oeuvre par le premier terminal :

- obtention d'au moins une donnée de positionnement d'un dispositif d'affichage du deuxième terminal affichant la première fenêtre, dans un environnement réel dans lequel sont positionnés le premier terminal et le deuxième terminal,
- obtention de l'au moins une donnée de positionnement du pointeur, l'au moins une donnée de positionnement du pointeur étant une donnée de positionnement du pointeur par rapport au dispositif d'affichage.

Dans un mode de réalisation particulier, le premier terminal est un casque de réalité mixte ou une paire de lunettes de réalité mixte.

Dans un mode de réalisation particulier, le procédé comprend en outre une étape de réduction de la partie de la première fenêtre, mise en oeuvre par le deuxième terminal.

Dans un mode de réalisation particulier, le procédé comprend en outre une étape de détermination de la partie de la première fenêtre, à partir de l'au moins une donnée de positionnement du pointeur, mise en oeuvre par le deuxième terminal.

L'invention concerne également un terminal de réalité mixte apte à mettre en oeuvre un procédé selon l'invention, ce terminal de réalité mixte correspondant au premier terminal précédemment évoqué.

En outre, l'invention concerne un système comprenant un premier terminal de réalité mixte apte à mettre en oeuvre le procédé selon l'invention et un deuxième terminal apte à mettre en oeuvre des étapes du procédé selon l'invention.

Dans un mode particulier de réalisation, les différentes étapes du procédé d'affichage en réalité mixte d'au moins un objet virtuel selon l'invention sont déterminées par des instructions de programmes d'ordinateurs.

En conséquence, l'invention vise aussi un programme d'ordinateur, sur un support d'informations, ce programme comportant des instructions qui conduisent un terminal de réalité mixte apte à mettre en oeuvre le procédé selon l'invention à exécuter les étapes du procédé d'affichage en réalité mixte d'au moins un objet virtuel selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de manière schématique, un système d'affichage en réalité mixte d'au moins un objet virtuel, selon un exemple de mode de réalisation de l'invention ;
- les figures 2A et 2B représentent, de manière schématique, un premier terminal et un deuxième terminal d'un système d'affichage en réalité mixte d'au moins un objet virtuel, selon un exemple de mode de réalisation de l'invention ;
- les figures 3A et 3B représentent respectivement, de manière schématique, un premier terminal et un deuxième terminal du système de la figure 1 ;
- les figures 4 et 5 représentent, sous forme d'organigrammes, les principales étapes de procédés d'affichage en réalité mixte d'au moins un objet virtuel, selon des exemples de modes de réalisation de l'invention ;
- la figure 6 représente, de manière schématique, l'écran d'un deuxième terminal d'un système d'affichage en réalité mixte d'au moins un objet virtuel, selon un exemple de mode de réalisation de l'invention.

Description détaillée de plusieurs modes de réalisation

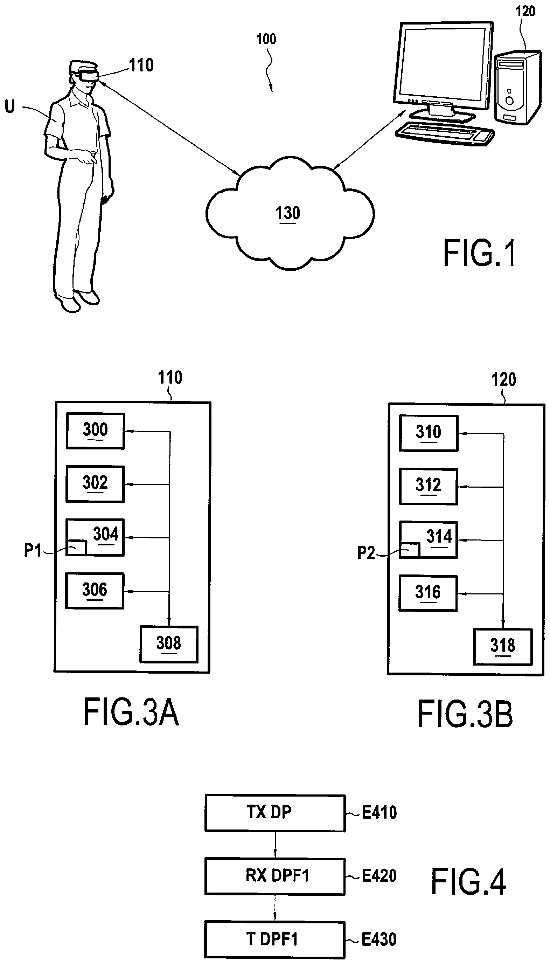

La **figure 1** représente, de manière schématique, un système 100 d'affichage en réalité mixte d'au moins un objet virtuel, apte à mettre en oeuvre un procédé d'affichage en réalité mixte d'au moins un objet virtuel, selon un exemple de mode de réalisation de l'invention.

La réalité mixe est une technologie permettant de fusionner un monde virtuel au monde réel, afin de produire un nouvel environnement et des visualisations dans lesquelles des objets physiques du monde réel et des objets numériques du monde virtuel coexistent et peuvent éventuellement interagir, par exemple en temps réel. La réalité mixte peut permettre l'affichage d'objets virtuels au moyen d'un dispositif d'affichage, de sorte à les superposer au monde réel.

Le système 100 comprend un premier terminal 110 et un deuxième terminal 120. Le premier terminal 110 et le deuxième terminal 120 peuvent communiquer entre eux au moyen d'un réseau 130 de télécommunications, par exemple un réseau de type Internet (par exemple WiFi), un réseau Bluetooth, ou un réseau de téléphonie fixe ou mobile (de type 3G, 4G etc.).

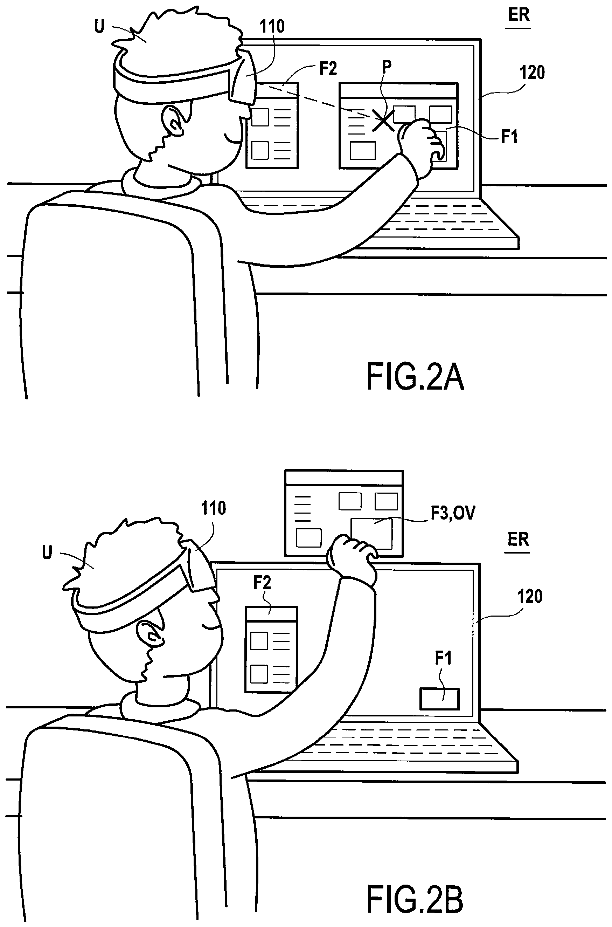

La **figure 2A** montre un exemple de premier terminal 110 et de deuxième terminal 120, dans lequel le premier terminal 110 est une paire de lunettes de réalité mixte, portée par l'utilisateur, et le deuxième terminal 120 est un ordinateur. L'écran du deuxième terminal affiche deux fenêtres F1 et F2 d'applications informatiques. L'utilisateur U du premier terminal 110 et du deuxième terminal 120, en fixant son regard sur une partie d'une des deux fenêtres F1, peut alors positionner un pointeur P du premier terminal 110 sur cette partie.

L'utilisateur U peut en outre effectuer un mouvement de saisie de la partie de la première fenêtre F1, ce mouvement de saisie étant interprété par le premier terminal 110 comme étant une commande d'affichage de la partie de la première fenêtre F1.

Le deuxième terminal 120 peut alors envoyer des données concernant la fenêtre F1 pointée, au premier terminal 110, de sorte que le premier terminal 110 puisse afficher une nouvelle fenêtre F3 à partir de ces données (voir **figure 2B**). Le deuxième terminal 120 peut alors cesser d'afficher la fenêtre F1, ou réduire celle-ci.

L'utilisateur U est ensuite libre de déplacer la nouvelle fenêtre F3. Il peut en outre interagir avec cette nouvelle fenêtre F3.

Le premier terminal 110 est typiquement une paire de lunettes de réalité mixte, telle que par exemple la paire de lunettes « Microsoft Hololens » (marque déposée), ou un casque de réalité mixte. En variante, le premier terminal 110 peut être un terminal mobile tel qu'un téléphone portable de type « smartphone » ou une tablette numérique.

Le deuxième terminal 120 est par exemple un terminal fixe ou mobile tel qu'un ordinateur, typiquement un ordinateur personnel, un téléphone mobile de type « smartphone », une tablette numérique, ou une télévision numérique.

Le premier terminal 110 comporte un module de pointage, un module d'envoi de donnée de positionnement, un module de réception de donnée de partie de première fenêtre et un module de traitement de donnée d'environnement réel et de donnée de partie de première fenêtre. De plus, le premier terminal 110 peut comporter un module d'obtention de donnée de positionnement, un module d'acquisition de donnée d'environnement réel et/ou un dispositif d'affichage d'objet virtuel.

Le dispositif d'affichage est dans un exemple un écran transparent ou semi-transparent, sur lequel peut être affiché un objet virtuel, cet objet virtuel prenant typiquement la forme d'un hologramme. L'écran transparent peut être positionné devant les yeux de l'utilisateur, de sorte que l'utilisateur voie l'objet virtuel affiché sur l'écran et l'environnement réel au travers de l'écran. Ainsi, l'écran transparent est typiquement monté sur une paire de lunettes de réalité mixte ou un casque de réalité mixte.

Dans un autre exemple, le dispositif d'affichage est un écran pouvant afficher une image issue du monde réel, typiquement acquise par le module d'acquisition, image sur laquelle peut être superposé un objet virtuel.

Le module d'acquisition est dans un exemple une caméra, un appareil photographique et/ou capteur de profondeur.

Les modules d'envoi et/ou de réception peuvent comporter un ou plusieurs sous-modules de communication longue distance, comme par exemple un sous-module Wifi et/ou un ou plusieurs sous-modules de communication courte distance comme par exemple un sous-module NFC (Near Field Communication) ou Bluetooth.

En outre, le deuxième terminal 120 peut comporter un dispositif d'affichage, un module de réception de donnée de positionnement, un module de traitement de donnée de positionnement, un module de capture de partie de première fenêtre, un module d'enregistrement de donnée de partie de première fenêtre, un module de réduction de partie de première fenêtre et/ou un module d'envoi de donnée de partie de première fenêtre.

Comme le montre la **figure 3A,** le premier terminal 110 présente l'architecture conventionnelle d'un ordinateur. Le premier terminal 110 comporte notamment un processeur 300, une mémoire morte 302 (de type « ROM »), une mémoire non volatile réinscriptible 304 (de type « EEPROM » ou « Flash NAND » par exemple), une mémoire volatile réinscriptible 306 (de type « RAM »), et une interface de communication 308.

La mémoire morte 302 du premier terminal 110 constitue un support d'enregistrement conforme à un exemple de mode de réalisation de l'invention, lisible par le processeur 300 et sur lequel est enregistré un programme d'ordinateur P1 conforme à un exemple de mode de réalisation de l'invention. En variante, le programme d'ordinateur P1 est stocké dans la mémoire non volatile réinscriptible 304.

Ce programme d'ordinateur P1 définit des modules fonctionnels et logiciels ici, configurés pour mettre en oeuvre des étapes d'un procédé d'affichage en réalité mixte d'au moins un objet virtuel, conforme à un exemple de mode de réalisation de l'invention. Ces modules fonctionnels s'appuient sur ou commandent les éléments matériels 300, 302, 304, 306 et 308 du premier terminal 110 cités précédemment. Ils comprennent notamment ici le module de pointage, le module d'envoi, le module de réception, le module de traitement, ainsi qu'éventuellement le module d'obtention et/ou le module d'acquisition.

En outre, comme le montre la **figure 3B,** le deuxième terminal 120 présente aussi l'architecture conventionnelle d'un ordinateur, en comprenant un processeur 310, une mémoire morte 312 (de type « ROM »), une mémoire non volatile réinscriptible 314 (de type « EEPROM » ou « Flash NAND » par exemple), une mémoire volatile réinscriptible 316 (de type « RAM »), et une interface de communication 318.

Comme pour le premier terminal 110, la mémoire morte 312 (ou la mémoire volatile réinscriptible 314) du deuxième terminal 120 constitue un support d'enregistrement conforme à un exemple de mode de réalisation de l'invention, lisible par le processeur 310 et sur lequel est enregistré un programme d'ordinateur P2 conforme à un exemple de mode de réalisation de l'invention.

Le programme d'ordinateur P2 définit des modules fonctionnels et logiciels ici, configurés pour mettre en oeuvre des étapes d'un procédé d'affichage en réalité mixte d'au moins un objet virtuel, conforme à un exemple de mode de réalisation de l'invention. Ils comprennent notamment ici le module de réception, le module de traitement, le module de capture, le module d'enregistrement, le module de réduction et/ou le module d'envoi.

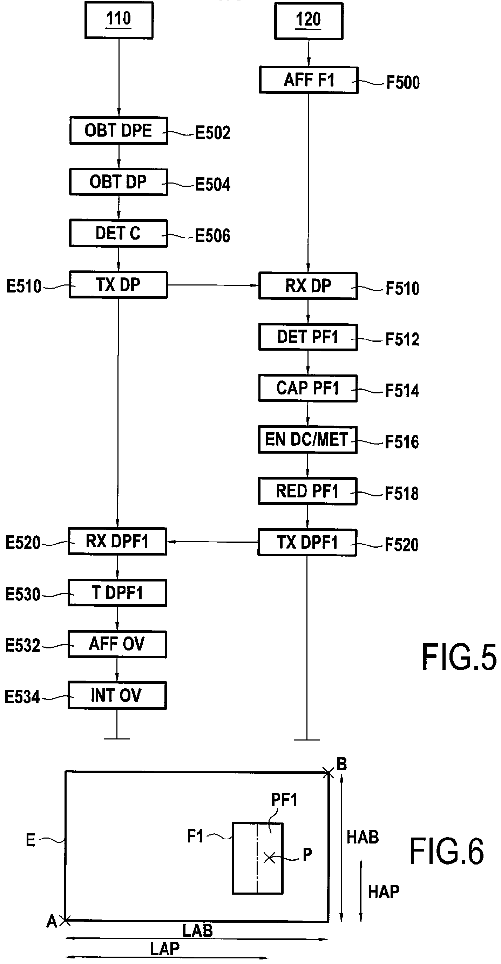

Les fonctions de ces différents modules sont décrites plus en détail ci-dessous, en référence aux étapes des procédés décrits en référence aux figures 4 et 5.

La **figure 4** représente un procédé d'affichage en réalité mixte d'au moins un objet virtuel, selon un exemple de mode de réalisation de l'invention.

Le procédé est mis en oeuvre par un premier terminal, par exemple le premier terminal 110 décrit en référence aux figures 1 et 3A.

Dans une étape E410, le module d'envoi du premier terminal 110 envoie au moins une donnée de positionnement DP d'un pointeur P positionné sur une partie d'une première fenêtre F1 d'une application informatique, la première fenêtre F1 étant affichée par le deuxième terminal 120.

De plus, dans une étape E420, au moins une donnée DPF1 relative à la partie de la première fenêtre F1 est reçue par le module de réception du premier terminal 110.

En outre, dans une étape E430, le module de traitement traite l'au moins une donnée DPF1 relative à la partie de la première fenêtre F1, de sorte à afficher en réalité mixte un objet virtuel à partir de l'au moins une donnée DPF1 relative à la partie de la première fenêtre F1.

La **figure 5** représente un procédé d'affichage en réalité mixte d'au moins un objet virtuel, selon un autre exemple de mode de réalisation de l'invention.

Le procédé est mis en oeuvre par un système d'affichage en réalité mixte d'au moins un objet virtuel, par exemple le système 100 écrit en référence à la figure 1.

Dans une étape F500, le dispositif d'affichage du deuxième terminal 120 affiche une première fenêtre F1, ainsi qu'éventuellement une ou plusieurs autres fenêtres F2.

Dans une étape E502, le premier terminal 110 obtient une ou plusieurs données de positionnement DPE du dispositif d'affichage du deuxième terminal 120 affichant la première fenêtre F1, dans un environnement réel ER dans lequel sont positionnés le premier terminal 110 et le deuxième terminal 120. Cette étape E502 est mise en oeuvre par le module d'obtention du premier terminal 110, ainsi que le module d'acquisition.

L'environnement réel ER désigne ici un espace dans lequel est positionné le deuxième terminal 120, ainsi que le premier terminal 110 lors de l'étape d'obtention E502. L'environnement réel ER prend typiquement la forme d'une pièce d'un bâtiment.

Le module d'acquisition du premier terminal 110 scanne en trois dimensions l'environnement réel ER. Un environnement virtuel EV est ensuite modélisé en trois dimensions par le module d'obtention, à partir des données issues du module d'acquisition, au moyen de coordonnées spatiales.

L'environnement virtuel EV désigne ici un espace numérique associé à un repère, typiquement un repère orthonormé, représentant au moyen de coordonnées spatiales l'environnement réel ER dans lequel le premier terminal 110 et le deuxième terminal 120 sont positionnés lors de l'étape d'obtention 502.

La modélisation permet d'obtenir une ou plusieurs données de positionnement DPE du dispositif d'affichage du deuxième terminal 120. Plus précisément, une ou plusieurs coordonnées spatiales du dispositif d'affichage du deuxième terminal 120, dans l'environnement virtuel EV correspondant à l'environnement réel ER, peuvent être obtenues par le module d'obtention, lors de la modélisation.

Selon un exemple, dans lequel le dispositif d'affichage est un écran E rectangulaire, les coordonnées spatiales de deux coins opposés de l'écran E, par exemple le coin A en bas à gauche de l'écran E et le coin B en haut à droite (voir **figure 6**), ou encore le coin en haut à gauche et le coin en bas à droite peuvent être obtenues. La hauteur HAB et la largeur LAB de l'écran E peuvent ensuite être déduites des coordonnées spatiales des deux coins opposés de l'écran E.

L'utilisateur du premier terminal 110 positionne le pointeur P du module de pointage du premier terminal 110 sur une partie PF1 de la première fenêtre F1.

Au moins une donnée DP de positionnement du pointeur peut alors être obtenue par le premier terminal 110, dans une étape E504, la donnée DP de positionnement du pointeur pouvant être une donnée de positionnement du pointeur par rapport au dispositif d'affichage. Cette étape 504 peut être mise en oeuvre par le module d'obtention du premier terminal 110, ainsi qu'éventuellement le module d'acquisition.

Plus précisément, une ou plusieurs coordonnées spatiales du pointeur P peuvent être obtenues par le module d'obtention du premier terminal 110, dans l'environnement virtuel EV correspondant à l'environnement réel ER. La ou les coordonnées spatiales obtenues peuvent être utilisées afin de calculer la ou les données DP de positionnement du pointeur par rapport au dispositif d'affichage.

Dans l'exemple de la figure 6 où le dispositif d'affichage est un écran E rectangulaire, plusieurs données DP de positionnement du pointeur P peuvent être obtenues par rapport à un point de l'écran, par exemple la composante verticale HAP et la composante horizontale LAP correspondant à la distance algébrique du pointeur P par rapport à un point situé à un coin de l'écran (étant typiquement l'origine d'un repère orthonormé), typiquement le coin A inférieur gauche de l'écran.

La ou les données DP de positionnement du pointeur P sont alors envoyées, dans une étape E510, par le module d'envoi du premier terminal 110, et peuvent être réceptionnées (étape F510) par le module de réception du deuxième terminal 120.

Cette étape d'envoi E510 peut être mise en oeuvre lorsqu'une commande C d'affichage d'un objet virtuel est détectée par le premier terminal 110 (étape E506).

Dans un exemple, la commande C d'affichage est un geste de l'utilisateur U, typiquement un mouvement de saisie, par exemple un mouvement de saisie de la partie PF1 de la première fenêtre F1 comme illustré par la figure 2A. Le module d'acquisition du premier terminal 110 peut alors acquérir une ou plusieurs images ou vidéos, comprenant le geste de l'utilisateur. La ou les images ou vidéos peuvent ensuite être analysées par le module de traitement du premier terminal 110, afin de détecter le geste.

Dans un autre exemple, la commande C d'affichage est une commande vocale, détectée par analyse de données audio acquises par le premier terminal 110.

Dans encore un autre exemple, la commande C d'affichage est une action sur un périphérique de contrôle du premier terminal 110, le périphérique étant par exemple un bouton ou une surface tactile. Lorsque le premier terminal 110 est une paire de lunettes de réalité mixte, le périphérique de contrôle peut être positionné sur les branches des lunettes.

Après réception de la ou les données DP de positionnement du pointeur P par le module de réception du deuxième terminal 120 (étape F510), le module de traitement du deuxième terminal 120 détermine, dans une étape F512, la partie PF1 de la première fenêtre F1, à partir de la ou les données DP de positionnement du pointeur P.

Dans un exemple, la partie PF1 de la première fenêtre F1 est un volet, une barre ou un onglet de la première fenêtre F1. La partie PF1 de la première fenêtre F1 est ainsi typiquement un onglet de navigation ou une barre de contacts. Dans un autre exemple, la partie PF1 de la première fenêtre F1 est constituée de l'ensemble de la première fenêtre F1.

Plus précisément, dans une sous-étape de l'étape F512, le module de traitement compare la ou les données DP de positionnement à une ou plusieurs données de positionnement d'une ou plusieurs parties de chaque fenêtre affichée par le dispositif d'affichage du deuxième terminal 120. Le module de traitement peut alors retrouver la partie PF1 de la première fenêtre F1 sur laquelle l'utilisateur a positionné le pointeur P du module de pointage du premier terminal 110.

Cette comparaison est éventuellement précédée d'une sous-étape de détermination de la position du pointeur P sur l'écran.

Dans l'exemple de la figure 6 où le dispositif d'affichage est un écran E rectangulaire, le module de réception peut recevoir à l'étape F510 la hauteur HAB de l'écran E, la largeur LAB de l'écran E, la composante verticale HAP correspondant à la distance algébrique du pointeur P par rapport à un point situé à un coin (typiquement le coin inférieur gauche) de l'écran E et la composant horizontale LAP correspondant à la distance algébrique du pointeur P par rapport à ce même point. Les coordonnées du pointeur P(X;Y) peuvent alors être obtenues au moyen des formules suivantes :

$$X = Rx * LAP/LAB,$$

et

$$Y = Ry * HAP/HAB,$$

dans lesquelles Rx et Ry désignent la résolution de l'écran.

Ainsi les coordonnées du pointeur P(X;Y) peuvent être obtenues même lorsque le premier terminal 110 ne connaît pas la résolution de l'écran du deuxième terminal 120.

En variante, les étapes E502, E504, E506, E510, F510 et/ou F512 ne sont pas mises en oeuvre, et le module de traitement du deuxième terminal 120 détermine la partie PF1 de la première fenêtre F1, à partir d'une ou plusieurs données de positionnement d'un pointeur d'un module de pointage du deuxième terminal 120. Dans cette variante, le module de pointage du deuxième terminal est par exemple une souris informatique.

Une fois la partie PF1 de la première fenêtre F1 déterminée, une capture de la partie PF1 de la première fenêtre F1, dans un format d'image numérique, peut être créée par un module de capture du deuxième terminal 120 (étape F514).

En outre, une ou plusieurs données de contexte DC relatives à la partie PF1 de la première fenêtre F1 et/ou une ou plusieurs métadonnées MET relatives à la partie PF1 de la première fenêtre F1 peuvent être enregistrées dans la mémoire non volatile réinscriptible 314 du deuxième terminal 120, par un module d'enregistrement du deuxième terminal 120 (étape F516).

Chaque donnée de contexte DC peut être une donnée décrivant l'application informatique, et pouvant ainsi indiquer le type, le nom, le numéro de version de l'application informatique. Chaque donnée de contexte peut aussi indiquer une taille d'affichage, une langue, un type de connectivité utilisé etc.

Pour une application de traitement de texte, chaque donnée de contexte peut aussi être une donnée décrivant le document, et peut par exemple indiquer l'auteur du document.

De plus, chaque métadonnée MET peut être une donnée de la partie PF1 affichée par le dispositif d'affichage du deuxième terminal 120. Ainsi, pour une application de traitement de texte, chaque métadonnée peut être un texte affiché dans la partie de la première fenêtre, un numéro de page courante affichée, une police sélectionnée, une taille d'un texte, un contenu d'un presse papier etc.

En outre, dans une étape F518, la partie de la première fenêtre F1 affichée par le dispositif d'affichage du deuxième terminal 120 est réduite par le module de réduction du deuxième terminal 120. Dans l'exemple où la partie PF1 de la première fenêtre F1 est constituée de l'ensemble de la première fenêtre F1, la première fenêtre F1 est réduite à la taille d'une icône, affichée par le dispositif d'affichage du deuxième terminal 120. En variante, le deuxième terminal 120 cesse d'afficher la première fenêtre F1.

Dans une étape F520, le module d'envoi du deuxième terminal 120 envoie une ou plusieurs données DPF1 relatives à la partie PF1 de la première fenêtre F1 déterminée à l'étape F512. La capture de la partie PF1 de la première fenêtre F1 dans un format d'image numérique et/ou la ou les données de contexte et/ou métadonnées sont par exemple envoyées lors de cette étape F520.

Suite à la réception de la ou des données DPF1 relatives à la partie PF1 de la première fenêtre F1 (étape E520) par le module de réception du premier terminal 110, le module de traitement du premier terminal 110 traite, dans une étape E530, la ou les données DPF1 reçues, de sorte à afficher en réalité mixte un objet virtuel OV à partir de cette ou ces données DPF1. Dans cette étape E530 de traitement, les coordonnées spatiales de l'objet virtuel OV peuvent être définies.

Dans une étape E532, l'objet virtuel OV est affiché par le dispositif d'affichage du premier terminal 110.

Plus précisément, l'objet virtuel OV peut être affiché par le dispositif d'affichage du premier terminal 110, de sorte que l'utilisateur U du premier terminal 110 puisse voir, au moyen du premier terminal 110, cet objet virtuel OV se superposer à l'environnement réel ER.

Lorsque le premier terminal 110 est une paire de lunettes de réalité mixte ou un casque de réalité mixte, le dispositif d'affichage est un écran transparent ou semi-transparent sur lequel est affiché, dans l'étape E532, l'objet virtuel OV. L'écran est monté sur les lunettes ou le casque de sorte que lorsque l'utilisateur U porte les lunettes ou le casque, il voie l'objet virtuel OV affiché sur l'écran et l'environnement réel ER au travers de l'écran.

Lorsque le premier terminal 110 est un terminal mobile tel qu'un téléphone mobile ou une tablette numérique, le dispositif d'affichage est un écran affichant, dans l'étape E532, l'objet virtuel OV superposé à une image issue de l'environnement réel ER, typiquement acquise par une caméra du terminal mobile.

L'objet virtuel OV est par exemple affiché de telle sorte que pour l'utilisateur U du premier terminal 110, l'objet virtuel OV apparaisse hors de la surface d'affichage du dispositif d'affichage du deuxième terminal 120. L'objet virtuel OV peut ainsi apparaitre autour de la surface d'affichage du dispositif d'affichage du deuxième terminal 120, par exemple au-dessus, en dessous, à gauche et/ou à droite. Les coordonnées spatiales de l'objet virtuel OV peuvent alors être définies, dans étape E530 de traitement, en fonction de la ou des données de positionnement DPE du dispositif d'affichage du deuxième terminal 120, obtenues à l'étape E502.

Dans un exemple, l'objet virtuel OV affiché est la capture de la partie PF1 de la première fenêtre, dans un format d'image numérique. En variante, l'objet virtuel OV peut être une vidéo.

Dans un autre exemple, le module de traitement crée l'objet virtuel OV à partir de la ou des données de contexte et/ou la ou les métadonnées. Pendant le temps de traitement, et ainsi avant l'affichage de l'objet virtuel OV, la capture de la partie PF1 de la première fenêtre peut être affichée par le dispositif d'affichage du premier terminal 110.

L'objet virtuel peut alors être une deuxième fenêtre de l'application informatique, pouvant être affichée en réalité mixte (voir par exemple la fenêtre F3 de la figure 2B), par exemple sous la forme d'un hologramme, ou une représentation en trois dimensions d'un service de l'application informatique correspondant à la partie PF1 de la première fenêtre, pouvant être affichée en réalité mixte (typiquement sous la forme d'un hologramme).

Dans un exemple où l'objet virtuel OV est une deuxième fenêtre, le module de traitement affiche une ou plusieurs métadonnées et peut utiliser une ou plusieurs données de contexte afin de définir la forme et l'ergonomie de la deuxième fenêtre. Ainsi, dans un exemple où la partie PF1 de la première fenêtre F1 est une fenêtre, un volet, une barre ou un onglet de navigation, l'objet virtuel OV peut être une deuxième fenêtre, pouvant être semblable à la partie PF1, et affichant sensiblement le même contenu que la partie PF1.

Dans d'autres exemples, le contenu, la forme et/ou l'ergonomie de l'objet virtuel OV peuvent être différents de ceux de la partie PF1. Ainsi, lorsque la partie PF1 de la première fenêtre F1 est une image en deux dimensions, l'objet virtuel OV peut être un cadre photo comprenant cette image.

Dans une étape E534, l'utilisateur U peut interagir avec l'objet virtuel OV, au moyen du premier terminal 110. L'interaction peut comprendre un déplacement de l'objet virtuel OV, et/ou une modification du contenu de l'objet virtuel.

Par exemple, si l'objet virtuel OV est une vidéo, la modification du contenu est la lecture de la vidéo.

Dans un autre exemple, lorsque l'objet virtuel OV est une deuxième fenêtre de traitement de texte, l'utilisateur peut utiliser un clavier virtuel du premier terminal 110 afin de modifier le contenu.

La modification du contenu peut être ensuite transmise au deuxième terminal 120, à des fins de synchronisation.

Les étapes du présent procédé peuvent être réitérées afin d'afficher plusieurs objets virtuels OV.

**Revendications**

**1.** Procédé d'affichage en réalité mixte d'au moins un objet virtuel (OV, F3), ledit procédé comprenant les étapes suivantes:

• envoi (E410, E510), par un premier terminal (110) et à destination d'un deuxième terminal différent du premier terminal, d'au moins une donnée (DP) de positionnement d'un pointeur (P) positionné sur une partie (PF1) d'une première fenêtre (F1) d'une application informatique, ladite première fenêtre (F1) étant affichée par le deuxième terminal (120), la donnée (DP) de positionnement d'un pointeur (P) étant obtenue par ledit premier terminal (110), l'étape d'envoi (E510) étant mise en oeuvre lorsqu'une commande (C) d'affichage de l'au moins un objet virtuel (OV, F3) est détectée (E506) par le premier terminal (110),
• réception (E420, E520), par le premier terminal (110) et en provenance du deuxième terminal, d'une pluralité de données (DPF1) relatives à ladite partie (PF1) de la première fenêtre (F1), comprenant une capture de ladite partie (PF1) de la première fenêtre (F1) dans un format d'image numérique, ainsi qu'au moins une donnée de contexte relative à ladite partie (PF1) de la première fenêtre (F1) et/ou au moins une métadonnée relative à ladite partie (PF1) de la première fenêtre (F1),
• création, par le premier terminal (110), dudit au moins un objet virtuel (OV, F3) à partir de ladite au moins une donnée de contexte et/ou ladite au moins une métadonnée,
• affichage (E532), par un dispositif d'affichage du premier terminal et en réalité mixte, dudit au moins un objet virtuel (OV, F3), et
• avant l'affichage dudit au moins un objet virtuel (OV, F3), affichage, par le dispositif d'affichage du premier terminal, de la capture de ladite partie (PF1) de la première fenêtre (F1) pendant le temps de traitement nécessaire à la création dudit au moins un objet virtuel.

**2.** Procédé selon la revendication 1, dans lequel l'au moins un objet virtuel est une deuxième fenêtre (F3) de l'application informatique.

**3.** Procédé selon la revendication 1 ou 2, comprenant en outre les étapes suivantes, mises en oeuvre par le premier terminal (110) :

• obtention (E502) d'au moins une donnée (DPE) de positionnement d'un dispositif d'affichage (E) du deuxième terminal (120) affichant ladite première fenêtre (F1), dans un environnement réel (ER) dans lequel sont positionnés le premier terminal (110) et le deuxième terminal (120),

• obtention (E504) de l'au moins une donnée (DP) de positionnement du pointeur (P), ladite au moins une donnée (DP) de positionnement du pointeur (P) étant une donnée (DP) de positionnement du pointeur (P) par rapport au dispositif d'affichage (E).

4. Procédé selon l'une quelconque des revendications 1 à 3, dans lequel le premier terminal (110) est un casque de réalité mixte ou une paire de lunettes de réalité mixte.

5. Procédé selon l'une quelconque des revendications 1 à 4, comprenant en outre une étape de réduction (F518) de la partie (PF1) de la première fenêtre (F1), mise en oeuvre par le deuxième terminal (120).

6. Procédé selon la revendication 5 et l'une quelconque des revendications 2 ou 3, comprenant en outre une étape de détermination (F512) de ladite partie (PF1) de la première fenêtre (F1), à partir de ladite au moins une donnée (DP) de positionnement du pointeur (P), mise en oeuvre par le deuxième terminal (120).

7. Terminal (110) de réalité mixte, apte à mettre en oeuvre un procédé selon l'une quelconque des revendications 1 à 4, ledit terminal (110) de réalité mixte correspondant au premier terminal (110) selon l'une quelconque des revendications 1 à 4.

8. Programme (P1) d'ordinateur comportant des instructions qui, lorsqu'elles sont exécutées par un terminal (110) de réalité mixte apte à mettre en oeuvre le procédé selon l'une quelconque des revendications 1 à 4, conduisent le terminal (110) à mettre en oeuvre les étapes du procédé selon l'une quelconque des revendications 1 à 4.

9. Support d'enregistrement lisible par un ordinateur sur lequel est enregistré un programme (P1) d'ordinateur selon la revendication 8.

10. Système (100) comprenant :

• un premier terminal (110) de réalité mixte selon la revendication 7 ; et,
• un deuxième terminal (120) apte à mettre en oeuvre des étapes du procédé selon l'une quelconque des revendications 1 à 6.

**Patentansprüche**

1. Mixed-Reality-Anzeigeverfahren mindestens eines virtuellen Objekts (OV, F3), wobei das Verfahren die folgenden Schritte umfasst:

• Senden (E410, E510) mindestens eines Positionsdatums (DP) eines Zeigers (P), der auf einem Teil (PF1) eines ersten Fensters (F1) einer Datenverarbeitungsanwendung positioniert ist, durch ein erstes Endgerät (110) und an ein vom ersten Endgerät verschiedenes zweites Endgerät, wobei das erste Fenster (F1) durch das zweite Endgerät (120) anzeigt wird und das Positionsdatum (DP) eines Zeigers (P) durch das erste Endgerät (110) erhalten wird,
wobei der Schritt des Sendens (E510) durchgeführt wird, wenn ein Befehl (C) zur Anzeige des mindestens einen virtuellen Objekts (OV, F3) durch das erste Endgerät (110) erkannt wird (E506),
• Empfangen (E420, E520) einer Vielzahl von Daten (DPF1) zum ersten Teil (PF1) des ersten Fensters (F1), die eine Erfassung des Teils (PF1) des ersten Fensters (F1) in einem digitalen Bildformat umfassen, sowie mindestens eines Kontextdatums zu dem Teil (PF1) des ersten Fensters (F1) und/oder mindestens ein Metadatum zu dem Teil (PF1) des ersten Fensters (F1) durch das erste Endgerät (110) und vom zweiten Endgerät,
• Erstellen des mindestens einen virtuellen Objekts (OV, F3) durch das erste Endgerät (110) auf Grundlage des mindestens einen Kontextdatums und/oder des mindestens einen Metadatums,
• Anzeigen (E532) des mindestens einen virtuellen Objekts (OV, F3) durch eine Anzeigevorrichtung des ersten Endgeräts und in Mischrealität, und
• vor dem Anzeigen des mindestens einen virtuellen Objekts (OV, F3) Anzeigen der Erfassung des Teils (PF1) des ersten Fensters (F1) durch die Anzeigevorrichtung des ersten Endgeräts während der notwendigen Verarbeitungszeit der Erstellung des mindestens einen virtuellen Objekts.

2. Verfahren nach Anspruch 1, wobei das mindestens eine virtuelle Objekt ein zweites Fenster (F3) der Datenverarbeitungsanwendung ist.

3. Verfahren nach Anspruch 1 oder 2, das außerdem die folgenden Schritte umfasst, die durch das erste Endgerät (110) durchgeführt werden:

• Erhalten (E502) mindestens eines Positionsdatums (DPE) einer Anzeigevorrichtung (E) des zweiten Endgeräts (120), die das erste Fenster (F1) anzeigt, in einer realen Umgebung (ER), in der das erste Endgerät (110) und das zweite Endgerät (120) positioniert sind,

- Erhalten (E504) mindestens eines Positionsdatums (DP) des Zeigers (P), wobei das mindestens eine Positionsdatum (DP) des Zeigers (P) ein Positionsdatum (DP) des Zeigers (P) im Verhältnis zur Anzeigevorrichtung (E) ist.

4. Verfahren nach einem der Ansprüche 1 bis 3, wobei das erste Endgerät (110) ein Mixed-Reality-Helm oder eine Mixed-Reality-Brille ist.

5. Verfahren nach einem der Ansprüche 1 bis 4, das außerdem einen Schritt des Reduzierens (F518) des Teils (PF1) des ersten Fensters (F1) umfasst, der durch das zweite Endgerät (120) durchgeführt wird.

6. Verfahren nach Anspruch 5 und einem der Ansprüche 2 oder 3, das außerdem einen Schritt des Bestimmens (F512) des Teils (PF1) des ersten Fensters (F1) auf Grundlage des mindestens einen Positionsdatums (DP) des Zeigers (P) umfasst und vom zweiten Endgerät (120) durchgeführt wird.

7. Mixed-Reality-Endgerät (110), das fähig ist, ein Verfahren nach einem der Ansprüche 1 bis 4 durchzuführen, wobei das Mixed-Reality-Endgerät (110) dem ersten Endgerät (110) nach einem der Ansprüche 1 bis 4 entspricht.

8. Computerprogramm (P1), das Anweisungen umfasst, die bei Ausführung durch ein Mixed-Reality-Endgerät (110) fähig sind, das Verfahren nach einem der Ansprüche 1 bis 4 durchzuführen, das das Endgerät (110) dazu veranlasst, die Schritte des Verfahrens nach einem der Ansprüche 1 bis 4 durchzuführen.

9. Computerlesbares Speichermedium, auf dem ein Computerprogramm (P1) nach Anspruch 8 gespeichert ist.

10. System (100), das umfasst:

- ein erstes Mixed-Reality-Endgerät (110) nach Anspruch 7; und
- ein zweites Endgerät (120), das fähig ist, Schritte des Verfahrens nach einem der Ansprüche 1 bis 6 durchzuführen.

**Claims**

1. Method for displaying, in mixed reality, at least one virtual object (OV, F3), said method comprising the following steps:

- a first terminal (110) sending (E410, E510), to a second terminal which is different from the first terminal, at least one datum (DP) on the positioning of a pointer (P) positioned on a portion (PF1) of a first window (F1) of a computer application, said first window (F1) being displayed by the second terminal (120), the datum (DP) on the positioning of a pointer (P) being obtained by said first terminal (110),
the sending step (E510) being implemented when a command (C) to display the at least one virtual object (OV, F3) is detected (E506) by the first terminal (110),
- the first terminal (110) receiving (E420, E520), from the second terminal, a plurality of data (DPF1) relating to said portion (PF1) of the first window (F1), comprising a capture of said portion (PF1) of the first window (F1) in a digital image format, as well as at least one context datum relating to said portion (PF1) of the first window (F1) and/or at least one metadatum relating to said portion (PF1) of the first window (F1),
- the first terminal (110) creating said at least one virtual object (OV, F3) on the basis of said at least one context datum and/or said at least one metadatum,
- a display device of the first terminal displaying (E532), in mixed reality, said at least one virtual object (OV, F3), and
- before displaying said at least one virtual object (OV, F3), the display device of the first terminal displaying the capture of said portion (PF1) of the first window (F1) during the processing time required to create said at least one virtual object.

2. Method according to Claim 1, in which the at least one virtual object is a second window (F3) of the computer application.

3. Method according to Claim 1 or 2, further comprising the following steps, which are implemented by the first terminal (110):

- obtaining (E502) at least one datum (DPE) on the positioning of a display device (E) of the second terminal (120) displaying said first window (F1), in a real environment (ER) in which the first terminal (110) and the second terminal (120) are positioned,
- obtaining (E504) the at least one datum (DP) on the positioning of the pointer (P), said at least one datum (DP) on the positioning of the pointer (P) being a datum (DP) on the positioning of the pointer (P) with respect to the display device (E).

4. Method according to any one of Claims 1 to 3, in which the first terminal (110) is a mixed-reality headset or a pair of mixed-reality glasses.

5. Method according to any one of Claims 1 to 4, further comprising a step of minimizing (F518) the portion (PF1) of the first window (F1), implemented by the second terminal (120).

6. Method according to Claim 5 and either one of Claims 2 and 3, further comprising a step of determining (F512) said portion (PF1) of the first window (F1), on the basis of said at least one datum (DP) on the positioning of the pointer (P), implemented by the second terminal (120).

7. Mixed-reality terminal (110), which is able to implement a method according to any one of Claims 1 to 4, said mixed-reality terminal (110) corresponding to the first terminal (110) according to any one of Claims 1 to 4.

8. Computer program (P1) comprising instructions which, when they are executed by a mixed-reality terminal (110) which is able to implement the method according to any one of Claims 1 to 4, lead the terminal (110) to implement the steps of the method according to any one of Claims 1 to 4.

9. Computer-readable storage medium on which a computer program (P1) according to Claim 8 is stored.

10. System (100) comprising:

    • a first, mixed-reality terminal (110) according to Claim 7; and
    • a second terminal (120) which is able to implement steps of the method according to any one of Claims 1 to 6.

FIG.1

FIG.3A

FIG.3B

| TX DP | E410 |
| RX DPF1 | E420 |
| T DPF1 | E430 |

FIG.4

FIG.2A

FIG.2B

| 110 | | 120 |

AFF F1 — F500

OBT DPE — E502

OBT DP — E504

DET C — E506

E510 — TX DP → RX DP — F510

DET PF1 — F512

CAP PF1 — F514

EN DC/MET — F516

RED PF1 — F518

E520 — RX DPF1 ← TX DPF1 — F520

E530 — T DPF1

E532 — AFF OV

E534 — INT OV

**FIG.5**

**FIG.6**

B

PF1

F1

E

P

HAB

HAP

A

LAB

LAP

**EP 3 489 811 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016014876 A

- WO 2015108887 A